# FASCICULE DE BREVET EUROPEEN

(11) **EP 0 512 898 B1**
(45) Date de publication et mention de la délivrance du brevet: **06.09.1995**
(21) Numéro de dépôt: 92401223.0
(22) Date de dépôt: 29.04.1992
(51) Int. Cl.: B64C 25/52

(54) **Train d'atterrissage pour aérodynes, à traverses en matériau composite**
Flugzeugfahrwerk mit aus einem faserverstärktem Kunststoff gefertigten Querträger
Aircraft landing gear, with composite cross-beam

(30) Priorité: 06.05.1991 FR 9105524
(43) Date de publication de la demande: 11.11.1992
(73) Titulaire: AEROSPATIALE Société Nationale Industrielle, 75781 Paris Cédex 16 (FR)
(72) Inventeur: Alande, Daniel, René, F-13220 Châteauneuf-Les-Martigues (FR); Balayn, Frédéric, F-13127 Vitrolles (FR); Bietenhader, Claude, F-13410 Lambesc (FR)
(74) Mandataire: Phélip, Bruno

(56) Documents cités:
- EP-A- 0 143 690
- FR-A- 1 272 208
- FR-A- 1 578 594
- US-A- 2 641 423
- US-A- 4 544 116

## Description

La présente invention est relative à un train d'atterrissage à patins ou à organes de contact analogues avec le sol , tels que des skis ou des flotteurs , dont les traverses ou arceaux sont en matériau composite . Un tel train d'atterrissage est destiné à équiper des aérodynes et notamment les hélicoptères .

De façon classique, les trains d'atterrissage à patins ou organes de contact analogues, tels que des skis , des flotteurs , etc., comprennent principalement deux tels organes, reliés entre eux et au fuselage de l'aérodyne par deux traverses en forme d'arceaux, dont les branches latérales s'appuient sur les patins , qui eux-mêmes sont prévus pour venir en contact avec la surface de réception de l'aérodyne . Dans la présente description, on utilisera indifféremment le terme " arceau " ou "traverse" pour qualifier cette partie du train d'atterrissage . Dans le cas d'un hélicoptère , notamment , ces traverses peuvent être également associées à des amortisseurs hydrauliques destinés à amortir les oscillations permises par le train d'atterrissage , lorsque l'appareil est au sol et que le rotor tourne , de façon à éviter l'entrée en résonance de la cellule de l'hélicoptère sur son train d'atterrissage .

A l'atterrissage , l'énergie d'impact est absorbée par déformation élastique et plastique des jambes des traverses et des liaisons entre le fuselage de l'hélicoptère et lesdites traverses . De façon courante , ces jambes sont réalisées en acier ou autre alliage choisi pour sa bonne propriété de déformation.

Ce type de train d'atterrissage n'est pas sans présenter certains inconvénients . En particulier, il est fréquent que des atterrissages à des vitesses verticales élevées , ou atterrissages "durs" , déforment plastiquement traverses et patins , qu'il devient alors nécessaire de remplacer dès que les déformations permanentes subies par le train ne laissent plus de marge à la rupture . Ceci est à l'origine de surcoûts importants .

En outre, si les alliages dans lesquels sont réalisées ces traverses sont choisis pour leur grande déformation à la rupture, en contrepartie, les efforts qu'ils supportent sont rapidement saturés en phase plastique , de sorte que le moindre atterrissage à une vitesse verticale quelque peu élevée transmet à la cellule de l'aérodyne un facteur de charge proche de la valeur de saturation et paraît " dur ", surtout s'il s'agit d'une cellule de faible masse .

Par ailleurs , ces facteurs de charge dépassent, dans les conditions d'atterrissage maximales, les facteurs de charge prévus en vol . De ce fait , une partie de la structure de l'aérodyne est surdimensionnée, puisque dimensionnée en fonction de l'atterrissage et non des paramètres de vol .

Ces trains d'atterrissage peuvent aussi subir une corrosion importante particulièrement à l'intérieur des tubes qui le composent , ce qui oblige à les changer régulièrement. Egalement , les tubes desdites traverses en acier sont parfois traités à forte température . En raison des difficultés de formage des tubes , la géométrie initiale des trains d'atterrissage peut être difficile à obtenir de façon uniforme.

Pour pallier les inconvénients des trains métalliques à patins , il a déjà été proposé de réaliser les traverses des atterrisseurs en des matériaux composites . A titre d'exemple , on peut citer notamment le train d'atterrissage décrit dans le brevet français de la demanderesse publié sous le numéro FR-A- 2.554.210, dont les traverses sont des poutres flexibles en matériau composite stratifié . Ces poutres sont constituées par des semelles , reliées deux à deux par des voiles qui leur sont perpendiculaires . Ces poutres sont associées à des plots élastomériques intercalés entre lesdites semelles et destinés à absorber en partie l'énergie de déformation desdites semelles lorsque lesdites poutres sont sollicitées à l'atterrissage . Les patins sont encastrés dans des manchons qui terminent les traverses à leur extrémité . La liaison des traverses au fuselage , qui est en partie assurée par une interposition de manchon élastomérique autorise, notamment lors des atterrissages glissés des hélicoptères , un pivotement limité desdites traverses autour d'axes transversaux de l'hélicoptère et des déformations angulaires relatives des traverses par rapport au fuselage de l'appareil.

La présente invention propose , quant à elle , un train d'atterrissage à traverses en matériau composite , qui permet de pallier les inconvénients précités du train d'atterrissage rigide classique et qui est d'un type nouveau.

En particulier , le matériau dans lequel sont réalisées les traverses du train d'atterrissage selon l'invention , est un matériau stratifié qui possède une grande élasticité et qui présente l'avantage d'être facilement conformable . L'utilisation d'un tel matériau stratifié pour la structure déformable d'un train d'atterrissage que propose l'invention, permet de lui donner une grande capacité d'absorption élastique d'énergie lors d'atterrissages en conditions extrêmes de vitesses verticales à l'impact.

La présente invention a donc pour objet un train d'atterrissage pour aérodyne et notamment pour hélicoptère , du type comportant deux organes latéraux de contact avec le sol tels que des patins, des skis , des flotteurs ou des organes analogues , lesdits organes étant reliés entre eux et au fuselage de l'aérodyne par au moins deux traverses,
chacune desdites traverses étant une poutre cintrée constituée en matériau stratifié de fibres à haute résistance agglomérées par de la résine synthétique thermodurcissable ,
lesdits traverses étant à leurs extrémités encastrées rigidement sur les organes de contact avec le sol et étant fixées à la partie inférieure de la structure du fuselage de l'aérodyne par une liaison articulée permettant une rotation limitée des traverses autour d'axes transversaux parallèles et des déformations angulaires relatives des traverses par rapport à la structure dans le plan vertical et dans le plan horizontal,
caractérisé en ce que:
- chacune desdites traverses est une poutre monolithique,
- la section de chaque traverse est polygonale et sensiblement constante ,
- les traverses sont constituées d'un noyau formé de fibres longitudinales , entouré d'une coque de tissus dont les fils sont orientés à plus ou moins 45° par rapport aux fibres longitudinales ,
- les organes de contact avec le sol sont des profilés fermés, creux , et rigides dont deux parois latérales sont parallèles et verticales.

Avantageusement , les fibres longitudinales et les tissus des traverses sont constituées de fibres de verre.

De préférence , la résine synthétique thermodurcissable d'agglomération des fibres synthétiques est une résine du type EPOXY . Les profilés creux constituant la partie résistante des organes de contact avec le sol peuvent être métalliques, de préférence en alliage d'aluminium et obtenus par filage .

De façon avantageuse, la section d'une traverse est notamment au niveau de ses extrémités sensiblement carrée à bords arrondis .

Préférentiellement encore , l'encastrement des traverses sur les profilés creux constituant la partie résistante des organes de contact avec le sol est réalisé par pénétration de l'extrémité de la traverse à l'intérieur du profilé et solidarisation des faces latérales de la traverse sur les côtés du profilé par un vissage ou boulonnage traversant . Les extrémités encastrées des traverses peuvent être renforcées par des manchons constitués de couches successives de tissus multidirectionnels de fibres agglomérées par de la résine synthétique thermodurcissable et en ce que les vis du boulonnage traversant sont disposées au travers desdits manchons et réparties de part et d'autres des extrémités des traverses.

Le profilé creux constituant la partie résistante des organes de contact avec le sol peut être renforcé au niveau de sa liaison avec les extrémités de chaque traverse par des cales interposées entre lesdits manchons et les parois intérieures du profilé creux.

Les moyens de liaison de chaque traverse sous la partie inférieure de la structure de fuselage de l'aérodyne comportent des manchons en élastomère associés à des colliers de fixation des traverses par le fuselage, lesdits manchons autorisant par leur élasticité le déplacement relatif angulaire entre ledit fuselage et ladite traverse lors des sollicitations en flexion desdites traverses, ainsi qu'un pivotement limité des traverses par rapport auxdits colliers lors des sollicitations en torsion desdites traverses au cours de l'atterrissage de l'aérodyne.

La traverse arrière peut être reliée au fuselage de l'aérodyne par l'intermédiaire de deux amortisseurs anti-résonance sol disposés de part et d'autre du fuselage; la traverse avant peut être reliée au fuselage de l'aérodyne par l'intermédiaire de deux amortisseurs anti-résonance sol disposés de part et d'autre du fuselage.

De façon avantageuse encore, chaque jambe des traverses est au moins partiellement entourée sur sa partie qui s'étend du fuselage de l'aérodyne jusqu'à l'organe de contact avec le sol auquel elle est solidarisée, par un carénage aérodynamiquement profilé. Un carénage aérodynamiquement profilé peut être constitué en deux parties, l'une au bord d'attaque, l'autre au bord de fuite, qui sont deux demi-coques en matériau stratifié fixées sur les jambes des traverses. Les demi-coques profilées d'un carénage aérodynamique sont constituées avec des tissus de fibres de verre dont les fils sont tissés à plus ou moins 45° et dont les fibres sont agglomérées par de la résine synthétique thermodurcissable.

Dans le cas où les organes de contact avec le sol sont des patins tubulaires , lesdits patins peuvent être renforcés au droit de leur liaison avec les traverses par des plaques anti-usure , avantageusement en tôle d'acier inoxydable, épousant la forme inférieure desdits patins.

La description qui suit d'un mode de réalisation particulier de l'invention est donnée à titre purement illustratif et nullement limitatif , en regard des dessins annexés , sur lesquels :
La figure 1 est une vue de côté schématique d'un train d'atterrissage conforme à l'invention.
La figure 2 est une demi-vue de face de la traverse avant du train d'atterrissage de la figure 1 .
La figure 3 est une demi-vue de face de la traverse arrière du train d'atterrissage de la figure 1 .
La figure 4 est une vue d'un détail de la figure 1 , représentant une liaison entre une jambe de traverse et un patin du train d'atterrissage .
La figure 5 est une vue en coupe selon la ligne V-V de la figure 4 .
La figure 6 est une vue en coupe selon la ligne VI-VI de la figure 4.
La figure 7 est une vue en coupe selon la ligne VII-VII de la figure 4.
La figure 8 est une vue de face avec arraché d'un détail de liaison entre une traverse et le fuselage de l'aérodyne .
La figure 9 est une vue en coupe selon la ligne IX-IX de la figure 8.
La figure 10 est une vue en perspective éclatée de la liaison de la figure 8.
La figure 11 est une vue semblable à la figure 1 d'un train d'atterrissage dont les jambes de traverses sont munies de carénages aérodynamiques profilés .
La figure 12 est une vue en coupe selon la ligne XII-XII de la figure 11 .

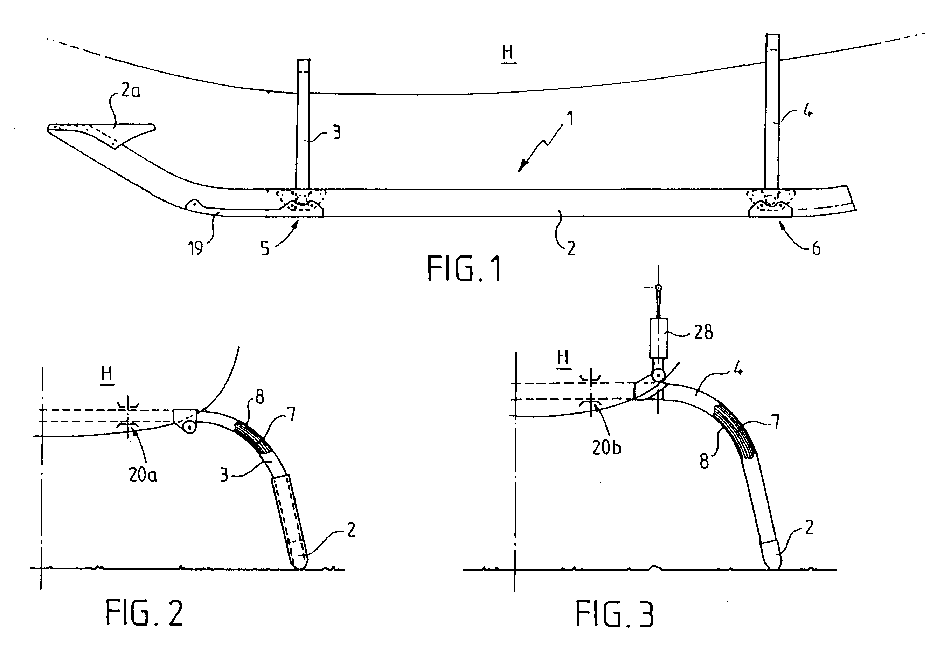

On voit sur la figure 1 qu'un train d'atterrissage conforme à un mode de réalisation de l'invention, référencé par 1 dans son ensemble , comporte principalement deux patins 2 reliés entre eux et au fuselage d'un aérodyne référencé par H , par deux traverses avant et arrière référencées respectivement par 3 et 4. Celles-ci sont solidarisées respectivement en 5 et 6 sur les patins 2.

La traverse arrière 4 est reliée , de façon classique à un cadre fort arrière (non représenté) fermant la partie centrale du fuselage de l'aérodyne H. La traverse avant 3 est , quant à elle , fixée à un cadre fort avant du fuselage.

Ainsi qu'on peut le voir plus particulièrement sur les figures 2 et 3 , les traverses 3 et 4 ont chacune une forme d'arceau trapézoïdal avec un raccordement des deux côtés par un arc de cercle . Leurs sections droites sont carrées à bords arrondis, la traverse arrière 4 étant de dimensions légèrement supérieures à la traverse avant 3. Cette forme polygonale , avantageusement carrée, des traverses 3 ou 4 est particulièrement avantageuse ; elle simplifie notamment considérablement la fixation des traverses 3 ou 4 sur les carénages et l'interface avec les patins 2.

Ces traverses sont réalisées en un matériau plein et homogène , qui est un faisceau 7 de fibres de verre unidirectionnelles agglomérées avec une résine époxy et entouré d'une peau 8 qui est un tissé de fibres de verre à plis croisés à plus ou moins 45° par rapport à la direction des fibres du faisceau 7. La section pleine constante des traverses permet d'éviter au montage les contreformes et les remplissages internes . Les fibres unidirectionnelles du faisceau 7 permettent à la traverse de répondre aux sollicitations en flexion qu'elle subit , tandis que la peau à fibres croisées 8 permet le rappel desdites traverses vers leur position de repos lorsque celles-ci sont sollicitées en torsion , notamment lors d'un atterrissage glissé .

Les traverses avant et arrière 3 et 4 sont respectivement reliées par des moyens de liaison 20a et 20b au fuselage de l'hélicoptère H . La traverse arrière 4 est associée à deux amortisseurs 28 anti-résonance sol , répartis de part et d'autre de l'hélicoptère H. Si nécessaire , on peut également équiper la traverse avant 3 de deux amortisseurs anti-résonance sol.

On donne ci-après un tableau de comparaison (tableau I) des paramètres de comportement élastique et plastique de matériaux classiquement utilisés jusqu'à présent pour réaliser des trains d'atterrissage, ainsi que du faisceau de fibres de verre proposé par l'invention.

**TABLEAU I**

| | Acier | Alliage d'aluminium | faisceau en fibres de verre/résine époxy |
|---|---|---|---|
| Densité | 7,8 | 2,8 | 2,1 |
| Module(hb) | 20000 | 7000 | 5500 |
| σ élastique(hb) | 120 | 30 | 160 |
| W élastique (kj/kg) | 0,46 | 0,23 | 11,4 |
| σ rupture (hb) | 138 | 48 | 160 |
| Allongement | 13% | 10% | 2,9% |
| W plastique | 20,5 | 13,4 | - |
| W totale (kj/kg) | 21 | 14 | 11,4 |

Il ressort clairement de ce tableau que la capacité d'absorption élastique du faisceau de libres de verre proposé par l'invention est bien meilleure que celle des alliages métalliques dans lesquels sont réalisés les trains classiques. Egalement , on notera que l'allongement utile du faisceau de fibres de verre , qui est de 2,9 % au lieu de 13% pour l'acier, permet de réaliser les traverses avec des sections beaucoup plus plates, ce qui réduit d'autant la traînée aérodynamique du train d'atterrissage .

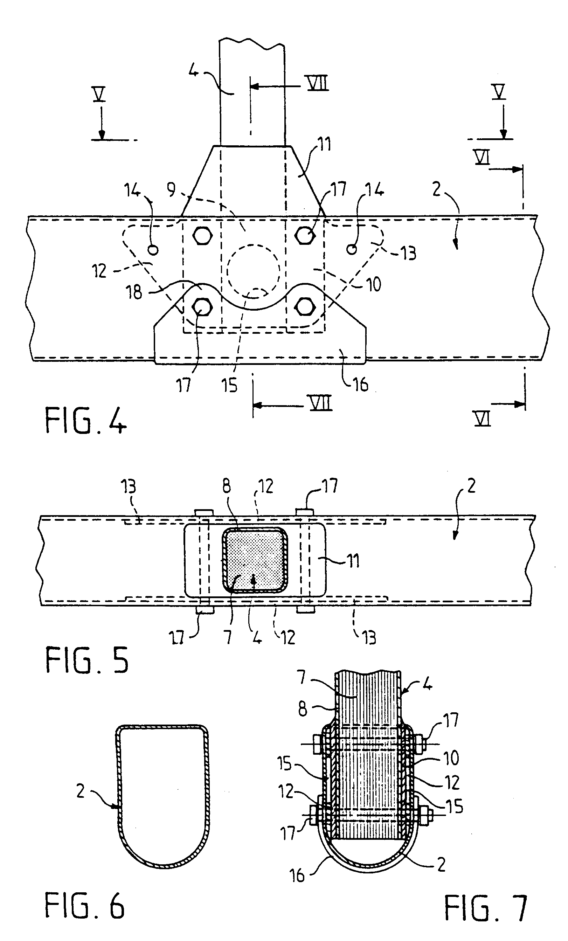

En se référant maintenant plus particulièrement aux figures 4 à 7 , on voit qu'une liaison entre la traverse 4 et un patin 2 est réalisée par encastrement de l'extrémité 9 de ladite traverse 4 dans ledit patin 2. Au niveau de cette extrémité 9, ladite traverse 2 est renforcée par un manchon 10 en tissus multidirectionnels de fibres de verre qui l'entoure et présente une forme principalement parallélépipédique rectangle. Ce manchon 10 est raccordé à la partie de ladite traverse 4 qui est en saillie par rapport au patin 2 , par un tronc de pyramide 11 s'évasant de ladite traverse 4, jusqu'audit manchon 10. Le patin 2 est un patin tubulaire réalisé en alliage d'aluminium filé et cintré , dont la section droite a principalement , ainsi qu'on peut le voir sur la figure 6 , une forme rectangulaire , dont la base en contact avec le sol est en arc de demi-cercle . La face dudit patin 2 en contact avec le sol est donc un demi-cylindre, tandis que la face dudit patin 2 qui lui est opposée est une face plate munie notamment au droit de la traverse 4, d'une découpe dans son épaisseur , correspondant sensiblement à la section droite du manchon de renforcement 10. Cette découpe s'étend parallèlement à la direction selon laquelle s'étend ledit patin 2. Les faces latérales dudit manchon 10, du patin 2 et de la traverse 4, sont donc parallèles .

En son intérieur, ledit patin est muni , au niveau de ladite liaison 6, de deux cales 12 interposées entre les faces latérales dudit patin 2 et les faces latérales du manchon 10. Ces cales 12 ont des formes principalement trapézoïdales , dont les grandes bases sont disposées vers les arêtes du patin 2 qui sont les plus proches de l'aérodyne H, ces grandes bases étant parallèles auxdites arêtes . La hauteur de ces cales 12 correspond à la hauteur du manchon 10 et des traverses 4 à l'intérieur du patin 2 et est inférieure à la hauteur du patin 2. Chaque cale 12 est collée sur une face latérale du patin 2 et maintenue fixée sur cette face par deux rivets 14 de sécurité disposés chacun respectivement au niveau d'une des ailes 13 de ladite cale 12. En son centre, une cale 12 est munie d'un évidement 15 qui est un trou destiné à l'alléger dans une zone non travaillante .

Les moyens de liaison 6 sont également associés à un sabot anti-usure 16 qui entoure partiellement le patin 2 auquel il est associé, au .niveau de sa partie en arc de cylindre destinée à être en contact avec le sol . Un tel sabot 16 anti-usure est réalisé en acier . Ces différentes pièces à savoir la traverse 4 et le manchon 10, les cales 12 , le patin 2, le sabot anti-usure 16, sont reliées par l'intermédiaire de quatre vis 17 qui traversent le patin 2 de sa face latérale extérieure (par rapport à l'ensemble du train d'atterrissage ) à sa face latérale intérieure . Ces quatre vis sont réparties de part et d'autre de la traverse 4 en s'étendant dans l'épaisseur du manchon 10 sans traverser ladite traverse 4. Elles sont destinées à travailler toutes de façon à peu près équivalente . Les efforts de matage des boulons associés à ces quatre vis 17 sont principalement supportés par les cales internes 12 , qui servent par ailleurs à renforcer la résistance en flexion du patin 2 auxquelles elles sont associées . Les têtes des vis 17 sont en appui sur les faces externes du patin 2, tandis que les écrous ( non représentés ) associés à ces vis 17 sont en appui sur la face interne dudit patin 2. Entre les têtes ou boulons des deux vis 17 d'une liaison 6 qui sont les plus éloignées du fuselage de l'aérodyne et les faces du patin 2 sont intercalées des pattes 18 qui prolongent le sabot anti-usure en sa partie supérieure , lesdites pattes 18 étant traversées par lesdites vis 17.

Les liaisons 5 entre la traverse avant 3 et les patins 2 sont sensiblement analogues aux liaisons 6 qui viennent d'être décrites . Seuls diffèrent les sabots anti-usure 19 (fig.1) auxquels lesdites liaisons 5 sont associés; les sabots 19 se prolongent vers l'avant des patins 2 , pratiquement jusqu'à leurs parties incurvées avant qui portent les marchepieds 2a.

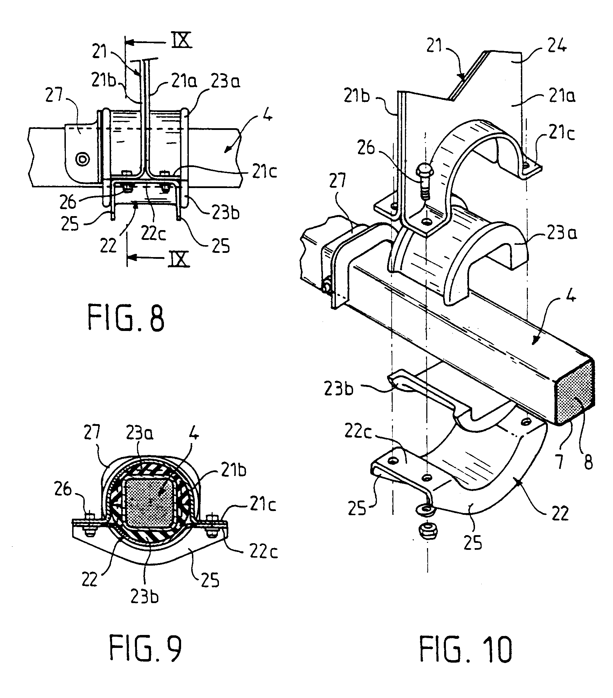

La liaison structurale entre les traverses 3 et 4 et l'aérodyne H a été plus particulièrement représentée sur les figures 8 à 10. Cette liaison est réalisée pour chaque traverse 3 ou 4 par deux fixations référencées respectivement par 20a et 20b , ménagées à la partie supérieure de chaque côté de l'appareil. Ces fixations 20a ou 20b autorisent une rotation des traverses 3 ou 4 autour d'axes transversaux de l'aérodyne H , ce qui permet d'éviter ou de limiter la torsion des traverses à l'atterrissage . Ainsi, notamment en cas d'atterrissage glissé ou symétrique , le moment introduit au niveau de la fixation traverses 3 ou 4/patins 2 n'est aucunement bloqué ou repris par la fixation au niveau de la structure de l'appareil H , mais équilibré par la flexion longitudinale des patins 2 . Cette liaison permet également les déformations de flexion des traverses dans le plan vertical et dans le plan horizontal.

Les moyens de liaison des fixations 20a et 20b comportent principalement des demi-colliers supérieurs et inférieurs référencés respectivement par 21 et 22 assemblés entre eux par des moyens 26 de vissage au niveau de leurs méplats de contact 21c et 22c . Ces deux demi-colliers 21 et 22 enserrent , lorsqu'ils sont en place , un manchon en élastomère 23 à surface extérieure cylindrique et dont la paroi intérieure épouse la forme de la traverse 3 ou 4 à laquelle il est associé . Ce manchon 23 est réalisé en deux demi-coquilles 23a et 23b . Il autorise les déplacements relatifs angulaires entre traverses 3 ou 4 et le support structural lors de la flexion de ladite traverse 3 ou 4 . Le demi-collier 21 se prolonge en sa partie supérieure par une paroi 24 qui est perpendiculaire à l'axe dudit demi-collier 21 et par laquelle l'ensemble de la fixation 20a et 20b est articulé en pivotement sur la structure de l'appareil H . Le demi-collier inférieur 22 est bordé latéralement par deux rebords 25 formant chape de protection pour les moyens 26 précités nécessaires au vissage . Chaque fixation 20a,20b est également associée à une butée 27 solidarisée à la traverse correspondante et déterminant le point de fixaion sur celle-ci.

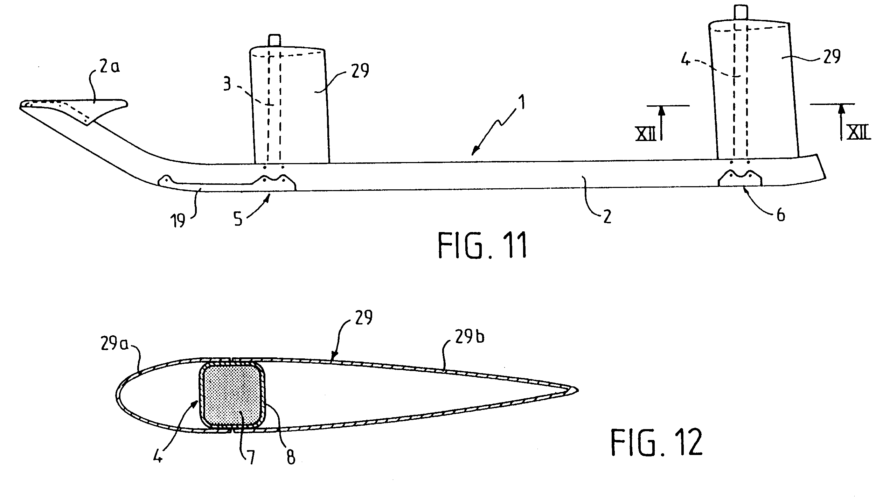

Ainsi que cela a été plus particulièrement représenté sur les figures 11 et 12 , les jambes des traverses 3 ou 4 peuvent être entourées , sur leurs parties qui s'étendent du fuselage de l'hélicoptère H jusqu'au patin 2 qui est associé à cette jambe , par un carénage 29 aérodynamique profilé . Un tel carénage 29 est constitué en deux parties l'une , référencée par 29a, formant le bord d'attaque dudit carénage , l'autre , référencée par 29b formant le bord de fuite . Ces deux parties sont des demi-coques en un matériau stratifié collées sur les faces des traverses . Ces demi-coques profilées 29a et 29b sont constituées par des tissus de fibres de verre dont les fibres sont orientées à plus ou moins 45° les unes des autres et qui sont agglomérées avec une résine synthétique thermodurcissable .

Les signes de référence, insérés après les caractéristiques techniques mentionnées dans les revendications , ont pour seul but de faciliter la compréhension de ces dernières, et n'en limitent aucunement la portée .

## Revendications

1. Train d'atterrissage pour aérodyne , et notamment pour hélicoptère , du type comportant deux organes latéraux (2) de contact avec le sol tels que des patins , des skis, des flotteurs ou des organes analogues, lesdits organes (2) étant reliés entre eux et au fuselage de l'aérodyne par au moins deux traverses (3, 4),
chacune desdites traverses étant une poutre cintrée constituée en matériau stratifié de fibres à haute résistance agglomérées par de la résine synthétique thermodurcissable , lesdites traverses étant à leurs extrémités (9) encastrêes rigidement sur les organes de contact avec le sol et étant fixées à la partie inférieure de la structure du fuselage (H)de l'aérodyne par une liaison articulée permettant une rotation limitée des traverses autour d'axes transversaux parallèles et des déformations angulaires relatives des traverses par rapport à la structure dans le plan vertical et dans le plan horizontal, caractérisé en ce que :
- chacune desdites traverses est une poutre monolithique,
- la section de chaque traverse est polygonale et sensiblement constante ,
- les traverses sont constituées d'un noyau (7) formé de fibres longitudinales ,entouré d'une coque (8) de tissus dont les fils sont orientés à plus ou moins 45° par rapport aux fibres longitudinales ,
- les organes de contact avec le sol sont des profilés fermés , creux , et rigides dont deux parois latérales sont parallèles et verticales .

2. Train d'atterrissage selon la revendication 1, caractérisé en ce que les fibres longitudinales et les tissus des traverses sont constituées de fibres de verre .

3. Train d'atterrissage selon l'une quelconque des revendications précédentes , caractérisé en ce que la résine synthétique thermodurcissable d'agglomération des fibres synthétiques est une résine du type EPOXY.

4. Train d'atterrissage selon l'une quelconque des revendications précédentes , caractérisé en ce que les profilés creux constituant la partie résistante des organes de contact avec le sol (2) sont métalliques, de préférence en alliage d'aluminium et obtenus par filage .

5. Train d'atterrissage selon l'une quelconque des revendications précédentes , caractérisé en ce que la section d'une traverse est notamment au niveau de ses extrémités (9) , sensiblement carrée à bords arrondis.

6. Train d'atterrissage selon l'une quelconque des revendications précédentes , caractérisé en ce que l'encastrement des traverses sur !es profilés creux constituant la partie résistante des organes de contact avec le sol est réalisé par pénétration de l'extrémité (9) de la traverse à l'intérieur du profilé et solidarisation des faces latérales de la traverse sur les côtés du profilé par un vissage ou boulonnage traversant .

7. Train d'atterrissage selon la revendication 6 , caractérisé en ce que les extrémités encastrées des traverses sont renforcées par des manchons (10) constitués de couches successives de tissus multidirectionnels de fibres agglomérées par de la résine synthétique thermodurcissable et en ce que les vis (17) du boulonnage traversant sont disposées au travers desdits manchons (10) et réparties de part et d'autre des extrémités (9) des traverses (3, 4 ).

8. Train d'atterrissage selon l'une quelconque des revendications précédentes , caractérisé en ce que le profilé creux constituant la partie résistante des organes de contact avec le sol est renforcé au niveau de sa liaison avec les extrémités (9) de chaque traverse par des cales (12) interposées entre lesdits manchons (10) et les parois intérieures du profilé creux.

9. Train d'atterrissage selon l'une quelconque des revendications précédentes, caractérisé en ce que les moyens de liaison de chaque traverse sous la partie inférieure de la structure de fuselage (H) de l'aérodyne comportent des manchons (23) en élastomère associés à des colliers de fixation des traverses (3, 4) sur le fuselage, lesdits manchons (23) autorisant par leur élasticité le déplacement relatif angulaire entre ledit fuselage et ladite traverse (3, 4) lors des sollicitations en flexion desdites traverses, ainsi qu'un pivotement limité des traverses (3, 4) par rapport auxdits colliers (22) lors des sollicitations en torsion desdites traverses (3 4) au cours de l'atterrissage de l'aérodyne.

10. Train d'atterrissage selon l'une quelconque des revendications précédentes, caractérisé en ce que la traverse arrière (4) est reliée au fuselage (H) de l'aérodyne par l'intermédiaire de deux amortisseurs anti-résonance sol disposés de part et d'autre du fuselage.

11. Train d'atterrissage selon l'une quelconque des revendications précédentes, caractérisé en ce que la traverse avant (3) est reliée au fuselage (H) de l'aérodyne par l'intermédiaire de deux amortisseurs anti-résonance sol disposés de part et d'autre du fuselage.

12. Train d'atterrissage selon l'une quelconque des revendications précédentes, caractérisé en ce que chaque jambe des traverses (3, 4) est au moins partiellement entourée sur sa partie qui s'étend du fuselage de l'aérodyne (H) jusqu'à l'organe de contact (2) avec le sol auquel elle est solidarisée, par un carénage aérodynamiquement profilé.

13. Train d'atterrissage selon la revendication 12, caractérisé en ce qu'un carénage aérodynamiquement profilé (29) est constitué en deux parties, l'une (29a) au bord d'attaque, l'autre (29b) au bord de fuite, qui sont deux demi-coques en matériau stratifié fixées sur les jambes des traverses (3, 4).

14. Train d'atterrissage selon la revendication 13 , caractérisé en ce que les demi-coques profilées (29a, 29b) d'un carénage aérodynamique (29) sont constituées avec des tissus de fibres de verres dont les fils sont tissés à plus ou moins 45° et dont les fibres sont agglomérées par de la résine synthétique thermodurcissable .

15. Train d'atterrissage selon l'une quelconque des revendications précédentes , caractérisé en ce que , dans le cas où les organes de contact (2) avec le sol sont des patins tubulaires , lesdits patins sont renforcés au droit de leur liaison avec les traverses (3,4) par des plaques anti-usure (6) , avantageusement en tôle d'acier inoxydable , épousant la forme inférieure desdits patins.

## Claims

1. A landing gear for an aerodyne, and especially for a helicopter, of the type comprising two lateral members (2) for contact with the ground such as skids, skis, floats or similar members, said members (2) being linked to each other and to the fuselage of the aerodyne by at least two crosspieces (3, 4), each of said crosspieces being a curved beam constituted by a laminated material of high-strength fibers agglomerated by thermosetting synthetic resin, said crosspieces being, at their extremities (9), rigidly embedded onto the members for contact with the ground and being fixed at the lower part of the structure of the fuselage (H) of the aerodyne by an articulated link allowing limited rotation of the crosspieces about parallel transverse axes and relative angular deformations of the crosspieces with respect to the structure in the vertical plane and in the horizontal plane, characterized in that :
- each of said crosspieces is a monolithic beam,
- the cross section of each crosspiece is polygonal and substantially constant,
- the crosspieces are constituted by a core (7) formed by longitudinal fibers, surrounded by a shell (8) of tissues whose threads are oriented approximately at 45° with respect to the longitudinal fibers,
- the members for contact with the ground are rigid, hollow and closed profiles, two lateral walls of which are parallel and vertical.

2. The landing gear according to claim 1, characterized in that the longitudinal fibers and the tissues of the crosspieces are constituted by glass fibers.

3. The landing gear according to any one of the preceding claims, characterized in that the thermosetting synthetic resin agglomerating the synthetic fibers is a resin of the EPOXY type.

4. The landing gear according to any one of the preceding claims, characterized in that the hollow profiles constituting the strengthening part of the members for contact with the ground (2) are of metal, preferably of aluminium alloy and obtained by extrusion.

5. The landing gear according to any one of the preceding claims, characterized in that the cross-section of a crosspiece is, especially in the region of its extremities (9), substantially square with rounded edges.

6. The landing gear according to any one of the preceding claims, characterized in that the embedding of the crosspieces onto the hollow profiles constituting the strengthening part of the members for contact with the ground is produced by penetration of the extremity (9) of the crosspiece inside the profile and rigidly fixing the lateral faces of the crosspiece onto the sides of the profile by being screwed or bolted through.

7. The landing gear according to claim 6, characterized in that the embedded extremities of the crosspieces are reinforced by sleeves (10) constituted by successive layers of multidirectional tissues of fibers agglomerated by thermosetting synthetic resin and in that the screws (17) of the bolts passing through are arranged through said sleeves (10) and distributed on either side of the extremities (9) of the crosspieces (3, 4).

8. The landing gear according to any one of the preceding claims, characterized in that the hollow profile constituting the strengthening part of the members for contact with the ground is reinforced in the region of its link with the extremities (9) of each crosspiece by spacers (12) interposed between said sleeves (10) and the inner walls of the hollow profile.

9. The landing gear according to any one of the preceding claims, characterized in that the means for linking each crosspiece under the lower part of the fuselage structure (H) of the aerodyne comprise sleeves (23) in an elastomer associated with collars for fixing the crosspieces (3, 4) onto the fuselage, said sleeves (23) allowing, by virtue of their elasticity, relative angular movement between said fuselage and said crosspiece (3, 4) during bending loading of said crosspieces, as well as limited pivoting of the crosspieces (3, 4) with respect to said collars (22) during torsional loading of said crosspieces (3, 4), in the course of landing by the aerodyne.

10. The landing gear according to any one of the preceding claims, characterized in that the rear crosspiece (4) is linked to the fuselage (H) of the aerodyne via two anti-ground-resonance dampers arranged on either side of the fuselage.

11. The landing gear according to any one of the preceding claims, characterized in that the front crosspiece (3) is linked to the fuselage (H) of the aerodyne via two anti-ground-resonance dampers arranged on either side of the fuselage.

12. The landing gear according to any one of the preceding claims, characterized in that each leg of the crosspieces (3, 4) is at least partially surrounded, over its part which extends from the fuselage of the aerodyne (H) to the member (2) for contact with the ground with which it is integral, by a fairing which is aerodynamically shaped in profile.

13. The landing gear according to claim 12, characterized in that a fairing (29) which is aerodynamically shaped in profile is constituted by two parts, one (29a) at the leading edge and the other (29b) at the trailing edge, which are two half-shells in laminated material fixed onto the legs of the crosspieces (3, 4).

14. The landing gear according to claim 13, characterized in that the half-shells (29a, 29b), which are shaped in profile, of an aerodynamic fairing (29) are constituted by tissues of glass fibers whose threads are woven at approximately 45° and whose fibers are agglomerated by thermosetting synthetic resin.

15. The landing gear according to any one of the preceding claims, characterized in that, in the case where the members (2) for contact with the ground are tubular skids, said skids are reinforced in line with their link with the crosspieces (3, 4) by anti-wear plates (6), advantageously in stainless steel sheet, matching the lower shape of said skids.

## Patentansprüche

1. Fahrwerk für ein Luftfahrzeug, und insbesondere für einen Hubschrauber, des Typs, der zwei Seitenteile (2) zum Kontakt mit dem Boden, wie Landungskufen, Schneekufen, Schwimmkörper oder ähnliche Teile, umfaßt, wobei die genannten Teile (2) miteinander und mit dem Rumpf des Luftfahrzeugs durch wenigstens zwei Traversen (3,4) verbunden sind, wobei jede der genannten Traversen ein gekrümmter Träger ist, der aus einem Schichtmaterial aus hochwiderstandsfähigen, durch ein wärmehärtendes Kunstharz gebundenen Fasern besteht, und wobei die genannten Traversen an ihren Enden (9) starr an den Teilen zum Kontakt mit dem Boden eingespannt und an dem unteren Teil des Rumpfaufbaus (H) des Luftfahrzeugs durch eine gelenkig angebrachte Verbindung befestigt sind, die eine begrenzte Drehung der Traversen um parallele Querachsen und relative Winkelverlagerungen der Traversen in bezug auf den Aufbau in der vertikalen und der horizontalen Ebene gestattet, dadurch gekennzeichnet, daß
- jede der genannten Traversen ein monolithischer Träger ist,
- der Querschnitt jeder Traverse mehreckig und im wesentlichen gleichbleibend ist,
- die Traversen aus einem Kern (7) bestehen, der aus Längsfasern gebildet und von einer Schale (8) aus Geweben umgeben ist, deren Fäden etwa mit 45° in bezug auf die Längsfasern orientiert sind,
- die Teile zum Kontakt mit dem Boden geschlossene, hohle und starre Profile sind, deren beide Seitenwände parallel und vertikal verlaufen.

2. Fahrwerk nach Anspruch 1, dadurch gekennzeichnet, daß die Längsfasern und die Gewebe der Traversen aus Glasfasern bestehen.

3. Fahrwerk nach einem der vorhergehenden Ansprüche, dadurch gekennzeichnet, daß das wärmehärtende Kunstharz zum Binden der Kunstfasern ein Harz des Epoxytyps ist.

4. Fahrwerk nach einem der vorhergehenden Ansprüche, dadurch gekennzeichnet, daß die Hohlprofile, die den festen Teil der Teile(2) zum Kontakt mit dem Boden bilden, aus Metall, vorzugsweise einer Aluminiumlegierung, bestehen und durch Strangpressen erhalten werden.

5. Fahrwerk nach einem der vorhergehenden Ansprüche, dadurch gekennzeichnet, daß der Querschnitt einer Traverse, insbesondere an ihren Enden (9), im wesentlichen viereckig mit abgerundeten Kanten ist.

6. Fahrwerk nach einem der vorhergehenden Ansprüche, dadurch gekennzeichnet, daß die Einspannung der Traversen an den Hohlprofilen, die den festen Teil der Teile zum Kontakt mit dem Boden bilden, durch Eindringen des Endes (9) der Traverse in das Innere des Profils und Verbinden der Seitenflächen der Traverse mit den Seiten des Profils durch eine Verschraubung oder eine durchgehende Bolzenverbindung ausgeführt ist.

7. Fahrwerk nach Anspruch 6, dadurch gekennzeichnet, daß die eingespannten Enden der Traversen durch Muffen (10) verstärkt sind, die aus aufeinanderfolgenden Schichten aus multidirektionalen Geweben aus durch wärmehärtendes Kunstharz gebundenen Fasern bestehen, und daß die Schrauben (17) der durchgehenden Bolzenverbindung quer durch die genannten Muffen (10) angeordnet und beiderseits der Enden (9) der Traversen (3,4) verteilt sind.

8. Fahrwerk nach einem der vorhergehenden Ansprüche, dadurch gekennzeichnet, daß das Hohlprofil, das den festen Teil der Teile zum Kontakt mit dem Boden bildet, an seiner Verbindungsstelle mit den Enden (9) jeder Traverse durch zwischen den genannten Muffen (10) und den innenwänden des Hohlprofils zwischengelegte Beilagplatten (12) verstärkt ist.

9. Fahrwerk nach einem der vorhergehenden Ansprüche, dadurch gekennzeichnet, daß die Verbindungsmittel jeder Traverse unter dem unteren Teil des Rumpfaufbaus (H) des Luftfahrzeugs Muffen (23) aus Elastomermaterial umfassen, die Schellen zur Befestigung der Traversen (3,4) am Rumpf zugeordnet sind, und daß, während der Landung des Luftfahrzeugs, die genannten Muffen (23) durch ihre Elastizität bei Biegebeanspruchungen der genannten Traversen die relative Winkelverlagerung zwischen dem geannten Rumpf und der genannten Traverse (3,4) sowie bei Drehungsbeanspruchungen der genannten Traversen (3,4) ein begrenztes Verdrehen der Traversen (3,4) in bezug auf die genannten Schellen (22) zulassen.

10. Fahrwerk nach einem der vorhergehenden Ansprüche, dadurch gekennzeichnet, daß die hintere Traverse (4) mit dem Rumpf (H) des Luftfahrzeugs mittels zweier Boden-Antiresonanzdämpfer verbunden ist, die an beiden Seiten des Rumpfes angebracht sind.

11. Fahrwerk nach einem der vorhergehenden Ansprüche, dadurch gekennzeichnet, daß die vordere Traverse (3) mit dem Rumpf (H) des Luftfahrzeugs mittels zweier Boden-Antiresonanzdämpfer verbunden ist, die an beiden Seiten des Rumpfes angebracht sind.

12. Fahrwerk nach einem der vorhergehenden Ansprüche, dadurch gekennzeichnet, daß jeder Schenkel der Traversen (3,4) an seinem Teil, der sich vom Rumpf des Luftfahrzeugs (H) zum Teil (2) zum Kontakt mit dem Boden, mit dem es fest verbunden ist, erstreckt, wenigstens teilweise von einer stromlinienförmig profilierten Verkleidung umgeben ist.

13. Fahrwerk nach Anspruch 12, dadurch gekennzeichnet, daß eine stromlinienförmig profilierte Verkleidung (29) aus zwei Teilen besteht, einem (29a) an der Vorderkante und einem anderen (29b) an der Hinterkante, die zwei Halbschalen aus Schichtmaterial sind, die an den Schenkeln der Traversen (3,4) befestigt sind.

14. Fahrwerk nach Anspruch 13, dadurch gekennzeichnet, daß die profilierten Halbschalen (29a, 29b) einer stromlinienförmigen Verkleidung (29) mit Geweben aus Glasfasern gebildet sind, deren Fäden etwa mit 45° gewebt sind und deren Fasern durch wärmehärtendes Kunstharz gebunden sind.

15. Fahrwerk nach einem der vorhergehenden Ansprüche, dadurch gekennzeichnet, daß, falls die Teile (2) zum Kontakt mit dem Boden rohrförmige Kufen sind, die genannten Kufen in Höhe ihrer Verbindung mit den Traversen (3,4) durch verschleißfeste Platten (6), vorteilhafterweise aus rostfreiem Stahlblech, das sich an der unteren Form der genannten Kufen anschmiegt, verstärkt sind.
